# EUROPEAN PATENT APPLICATION

(11) **EP 1 942 658 A2**
(43) Date of publication of application: **09.07.2008**
(21) Application number: 07254759.9
(22) Date of filing: 07.12.2007
(51) Int. Cl.: H04N 5/00

(54) **Digital television devices implementing a multiple stage boot-up process**

(30) Priority: 05.01.2007 US 620634
(71) Applicant: Syntax Brillian Corp., Tempe AZ 85281 (US)
(72) Inventor: Miller, Samuel, Chino Hills, CA 91709 (US)
(74) Representative: Kenrick, Mark Lloyd

(57) **Abstract**

A boot-up method for a digital television device is disclosed which significantly reduces the boot-up time when the power is turned on. At power-on, the control processor first loads a first subset of all the required registers, and start to perform a display function using the first subset of the register values. While the user is viewing the displaying images, the processor loads the remaining registers and completes the boot-up process. The first subset of registers to load may be determined based on information about the last state of the television device before it was last turned off, e.g., what input source a viewer was viewing. Alternatively, it maybe a predetermined subset of registers corresponding to a predetermined initial function.

## Description

### BACKGROUND OF THE INVENTION

This invention relates to digital television devices, and in particular, it relates to control of a boot-up process of digital television devices.

While traditional (analogue) television devices can turn on almost instantaneously, existing digital television devices typically take much longer to turn on, as long as 10 seconds or more. For viewers' convenience, it is desirable to reduce the turn-on time of digital television devices.

### SUMMARY OF THE INVENTION

The present invention is directed to a circuit and or firmware for controlling the turn on of a digitally controlled standard definition or high definition television device and related method that substantially obviate one or more of the problems due to limitations and disadvantages of the related art.

An object of the present invention is to provide a control circuit and or firmware and method that reduces the turn on time of digital television devices.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a method for booting up a digital television device, the digital television devices comprising a processor having a plurality of registers, and a memory connected to the processor and storing values for the plurality of registers, the method including: (a) loading values into a first subset of the plurality of registers from the memory, (b) performing a first function of the television device using values of the first subset of registers, and (c) loading values into a second subset of the plurality of registers from the memory while performing the first function. In one implementation, the method further includes, before step (a), (d) retrieving saved state information regarding the last state of the television device, and (e) identifying the first set of registers to be loaded based on the retrieved information using a lookup table.

It is to be understood that both the foregoing general description and the following detailed description are exemplary and explanatory and are intended to provide further explanation of the invention as claimed.

### BRIEF DESCRIPTION OF THE DRAWINGS

Figure 1 is a flow chart illustrating a boot-up method for a digital television device according to an embodiment of the present invention.
Figure 2 is a flow chart illustrating a boot-up method for a digital television device according to another embodiment of the present invention.
Figure 3 is a block diagram illustrating a digital television device according to an embodiment of the present invention.

### DETAILED DESCRIPTION OF THE PREFERRED EMBODIMENTS

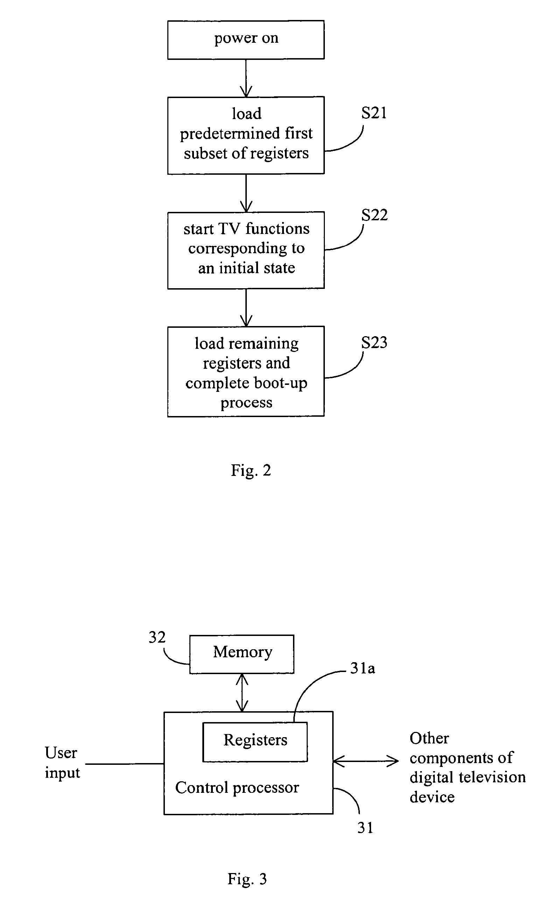

As shown in Fig. 3, a digital television device has a control processor 31 that controls the various functions of the TV. The processor 31 includes a plurality of registers 31a to store register values that are used by the processor to control the functions of various sub-components of the digital television device. One reason that an existing digital television device takes a long time (e.g. 10 seconds or more) to turn on is because when the TV is turned on (power on), the control processor 31 must be booted up, and as a part of the boot-up process, the processor loads data from a memory 32 (a non-volatile memory or a battery backed memory) into its registers 31a. A modem digital TV typically has on the order of one thousand registers, and according to the conventional boot-up process all registers are loaded before an image is displayed on the screen.

Not all registers, however, are needed to perform a particular function of the TV. The registers fall into different categories and are involved in the control of different functions of the TV. For example, a digital TV may have the following categories of registers: control registers related to processing of Standard Definition TV Signals, control registers related to processing of ATSC Tuner signals, control registers related to processing of VGA Computer signals, control registers related to scaling processing of video signals, control registers related to de-interlacing processing of video signals, control registers related to driving a specific display device such as LCD Panel, Plasma Panel, LCoS Panel, etc. While all parameters are needed for the control processor 31 to fully perform all possible control functions, only a subset of the parameters are needed to perform any particular function. For example, the VGA control registers need not be set up to process HDMI (High-Definition Multimedia Interface) signals, the Standard Definition control registers need not be set up to process High Definition (ATSC) signals, etc.

According to embodiments of the present invention, turn-on time of a digital TV can be significantly reduced by initially loading only a subset of the registers 31a. When the TV is powered on, only a subset of the registers are loaded so that the TV can perform a desired function, such as receiving and displaying a desired broadcast channel. While the viewer is viewing the initial display, the remaining registers are loaded and the control process completes its boot up process. Preferably, the initial display is determined by what the viewer was viewing last before the TV was turned off. To this end, the processor saves information about the state of the TV before the TV is turned off, including the source that the TV is currently receiving input from, such as tuner, cable, set-top box, DVD player, etc. This is already performed by most existing digital TVs. A lookup table pre-stored in a memory may be employed to provide a list of registers necessary for performing each of a plurality of functions.

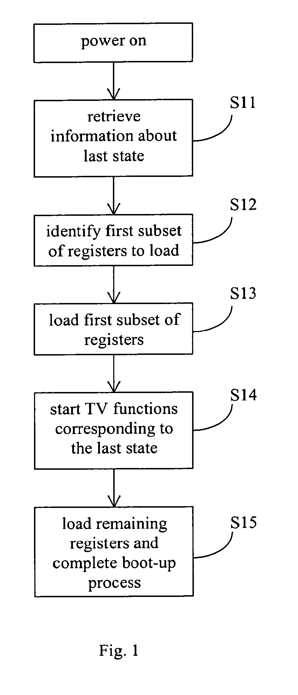

Fig. 1 is a flowchart showing a multiple-stage boot-up process according to an embodiment of the present invention. When the power is turned on, the processor retrieves saved information about the state of the TV immediately before it was turned off, e.g., whether the viewer was viewing images supplied by a tuner, cable, set-top box, DVD player, etc. (step S11). The processor then identifies a first subset of registers to load based on the retrieved information about the last state of the TV (step S12), e.g., by using a look up table, and load the first subset of registers (step S13). The processor than controls the TV to display images according to the last state of the TV, e.g., the same channel a viewer was watching before the TV was last turned off (step S 14). While the images are displayed, the process loads the remaining registers and completes the boot-up process (step S15). The remaining registers may be loaded in one stage or in two or more additional stages (i.e., loading a second subset of registers which allow the TV to perform additional functions, etc.). After the boot-up process is complete, the TV can perform all of its functions.

Alternatively, although less preferred, the processor may be programmed to always perform a particular initial function when powered on, e.g., always tuning to a particular broadcast channel initially. The initial function may be chosen by the user using the setup functions of the TV. In this alternative design, the processor will load a predetermined subset of registers and no lookup table is necessary. As shown in Fig. 2, the processor loads a predetermined first subset of registers (step S21), starts TV functions corresponding to an initial state using the first subset of register (step S22), and then loads the remaining registers and completes the boot-up process (step S23). It can be seen that this process is similar to the process shown in Fig. 1 but the steps of retrieving information about the last state and looking up first subset of registers are eliminated.

It will be apparent to those skilled in the art that various modification and variations can be made in the multiple-stage boot-up method of the present invention without departing from the spirit or scope of the invention. Thus, it is intended that the present invention cover modifications and variations that come within the scope of the appended claims and their equivalents.

## Claims

1. A method for booting up a digital television device, the digital television devices comprising a processor having a plurality of registers, and a memory connected to the processor and storing values for the plurality of registers, the method comprising:
(a) loading values into a first subset of the plurality of registers from the memory;
(b) performing a first function of the television device using values of the first subset of registers; and
(c) loading values into a second subset of the plurality of registers from the memory while performing the first function.

2. The method of claim 1, further comprising loading additional subsets of the plurality of registers from the memory while performing the first function.

3. The method of claim 2, wherein the first function is displaying images on the television device which is performed while the second and additional subsets of registers are being loaded.

4. The method of claim 1, further comprising before step (a):
(d) retrieving saved state information regarding a last state of the television device; and
(e) identifying the first set of registers to be loaded based on the retrieved information using a lookup table.

5. The method of claim 1, wherein the first subset of the plurality of registers is a predetermined subset of registers and the first function is a predetermined function.

6. The method of claim 5, further comprising: pre-setting the predetermined subset of registers and the predetermined function.

7. A carrier medium carrying processor readable instructions arranged to control a processor to carry out the method of any preceding claim.

8. A digital television device comprising:
a processor having a plurality of registers; and
a memory connected to the processor;
the device being arranged to:
(a) load values into a first subset of the plurality of registers from the memory;
(b) perform a first function of the television device using values of the first subset of registers; and
(c) load values into a second subset of the plurality of registers from the memory while performing the first function.
